# EUROPÄISCHE PATENTSCHRIFT

(11) **EP 3 576 517 B1**
(45) Veröffentlichungstag und Bekanntmachung des Hinweises auf die Patenterteilung: **24.02.2021**
(21) Anmeldenummer: 18701403.0
(22) Anmeldetag: 08.01.2018
(51) Int. Cl.: A01G 9/029, A01G 22/63

(54) **VERFAHREN ZUM KULTIVIEREN VON PFLANZEN**
METHOD FOR CULTIVATING PLANTS
PROCÉDÉ DE CUTLURE DE PLANTES

(30) Priorität: 31.01.2017 DE 102017101885
(43) Veröffentlichungstag der Anmeldung: 11.12.2019
(73) Patentinhaber: Orchideen-Bremkens KG, 47608 Geldern-Walbeck (DE)
(72) Erfinder: BREMKENS, Peter, 47608 Geldern (DE); BREMKENS, Christian, 47608 Geldern (DE)
(74) Vertreter: Wischmeyer, André
(86) Internationale Anmeldenummer: PCT/EP2018/050369
(87) Internationale Veröffentlichungsnummer: WO 2018/141506

(56) Entgegenhaltungen:
- WO-A1-2009/000480
- WO-A1-2015/084163
- US-A1- 2016 029 572

## Beschreibung

Die Erfindung betrifft ein Verfahren zum Kultivieren einer Pflanze, insbesondere eines Epiphyten, insbesondere einer Orchidee, wobei ein Pflänzling zumindest teilweise von einem Substrat umgeben in einen Pflanztopf eingebracht wird, der Pflanztopf in einen von mehreren Nutzen eines Trays eingebracht wird und der Pflanztopf im Nutzen festgelegt wird.

Derartige Verfahren sowie Vorrichtungen, mit denen dieses Verfahren durchgeführt werden kann, sind im Stand der Technik bekannt. So zeigt beispielsweise die US 5022183 ein Tray mit einem Pflanztopf, in den ein Pflänzling von Substrat umgeben eingebracht werden kann und der Pflanztopf im Nutzen des Trays eingebracht und dort festgelegt werden kann. Ein derartiger Gegenstand wird entsprechend einem oben genannten Verfahrens verwendet.

Ein anderes gattungsgemäße Verfahren ist aus der WO 2015/084163 bekannt.

Ein Nachteil eines derartigen Verfahrens, insbesondere bei der Kultivierung von Epiphyten, ist, dass Teile der Pflanze, insbesondere die Wurzeln, ggf. auch deren Blätter, während der Kultivierung an dem Pflanztopf und/oder dem Tray anhaften oder durch Einwachsen in etwaige Ausnehmungen mit diesen verwachsen können. Zudem können Teile der Pflanze von einem Pflanztopf in einen benachbarten Pflanztopf hinüberwachsen und sich dort so festlegen, dass eine beschädigungsfreie Entnahme der Pflanze erschwert wird.

Das bekannte Verfahren soll dahingehend verbessert werden, dass die Entnahme einer Pflanze aus dem Tray beschädigungsfreier ermöglicht wird.

Erfindungsgemäß wird dies durch ein Verfahren der eingangs genannten Art erreicht, bei dem der Pflanztopf soweit in den Nutzen des Trays eingebracht wird, dass eine für Wurzelwerk undurchdringbare und insbesondere undurchbrochene Nutzenwandung den Pflanztopf überragt. Dadurch, dass die Nutzenwandung den Pflanztopf überragend ausgeführt ist, wird die Pflanze oberhalb des Pflanztopfes zumindest teilweise weiter auf den Nutzen beschränkt und eine gegenseitige Beeinträchtigung von benachbarten Pflanzen wird somit vermindert. Die Pflanze kann nicht mit dem Tray verwachsen. Es kann besser verhindert werden, dass insbesondere bei der Kultivierung eines Epiphyten Wurzeln von einem Pflanztopf in einen benachbarten Pflanztopf im Tray hinüberwachsen. Somit wird eine Entnahme der Pflanze aus dem Pflanztopf möglich, die eine Beschädigung der Pflanze, insbesondere der Wurzeln, weitgehend vermeidet.

In einer vorteilhaften Ausgestaltung des Verfahrens wird durch das Einbringen des Pflanztopfes in den Nutzen oberhalb eines Pflanztopfbodens ein vollumfänglich seitlich begrenzter, für Wurzelwerk undurchdringlicher und insbesondere undurchbrochener Wachstumsbereich der Pflanze dargeboten. Ein Wachstumsbereich der Pflanze ist hierbei der Innenbereich des Pflanztopfes sowie der Bereich des Nutzens vom Pflanztopfrand bis zu einer oberen Nutzenöffnung, der der Pflanze zur Ausbildung ihrer Blätter und Wurzeln zur Verfügung gestellt wird. Die vollumfänglich seitliche undurchbrochene Begrenzung dieses Bereiches verhindert weitgehend, dass die Pflanze mit ihren Wurzeln an dem Pflanztopf oder dem Nutzen festwächst. Die Pflanze kann somit leicht und unter Vermeidung von Beschädigungen aus diesem Bereich entfernt werden.

Bevorzugt sind der Pflanztopf und der Nutzen des Trays so aufeinander abgestimmt, dass ein Übergang zwischen dem oberen Außenrand des Pflanztopfes und der Nutzenwandung für Wurzeln undurchdringlich ist. Ein Verwachsen der Pflanze mit dem Pflanztopf bzw. dem Nutzen durch Klemmen der Wurzel zwischen Pflanztopf und Nutzen wird somit weiterhin vermieden, was die beschädigungsfreie Entnahme der Pflanze aus dem Tray weiter erleichtert. Ein Übergang wird dann als undurchdringlich angesehen, wenn die minimale lichte Weite kleiner als 3 mm ist. Insbesondere ist der Übergang undurchdringbar, wenn durch sich berührende Abschnitte von Pflanztopf und Nutzenwandung ausgebildet ist.

Vorteilhafterweise wird die entnommene Pflanze in einen mit Substrat gefüllten Pflanztopf eingesetzt. Dabei ist der mit Substrat gefüllte Pflanztopf regelmäßig größer als der im Tray eingesetzt Pflanztopf. Insbesondere weist der neue Pflanztopf ein größeres durch den Pflanzentopfboden und die Pflanzentopfwandung definiertes Volumen auf. Die Pflanze erhält hierdurch mehr Raum für fortgesetztes Wachstum.

In einer bevorzugten Ausgestaltung des Verfahrens wird am Ende der Kultivierung die kultivierte Pflanze mit dem Substrat aus dem im Tray festgelegten Pflanztopf entnommen, wobei der Pflanztopf im Nutzen des Trays verbleibt. Dadurch, dass der Pflanztopf im Nutzen festgelegt ist, wird ein Entnehmen der Pflanze aus dem Pflanztopf erleichtert. Der Pflanztopf bleibt dabei zurück. Dieser Verfahrensschritt wird weiterhin dadurch unterstützt, dass der Pflanztopf soweit in den Nutzen eingebracht wurde, dass eine für Wurzelwerk undurchdringbare und insbesondere undurchbrochene Nutzungswandung den Pflanztopf überragt. Hierdurch wird ein Verwachsen benachbarter Pflanzen während der Kultivierung vermieden, so dass damit eine Entnahme einzelner Pflanzen aus dem Pflanztopf erleichtert wird gegenüber einem ein Verwachsen nicht verhindernden Verfahren. Insbesondere verklemmt sich die Pflanze nicht mit dem Pflanztopf und einem erfindungsgemäß wie vorbeschrieben darauf abgestimmten Tray, so dass die Entnahme verbessert ist.

Das Festlegen des Pflanztopfes im Nutzen kann durch mindestens ein Befestigungsmittel erfolgen. Zum Festlegen wird der Pflanztopf soweit in den Nutzen des Trays eingebracht, dass das mindestens eine Befestigungsmittel einen Eingriff zwischen Pflanzentopf und Nutzen bewirkt.

Als Befestigungsmittel kann ein mechanisches und/oder anderes Befestigungsmittel dienen. So ist es beispielsweise denkbar, einen Haftpunkt vorzusehen, mit dem Tray und Pflanztopf z.B. über Verkleben oder Verschmelzen aneinander befestigt werden.

Mit Vorteil erfolgt die Kultivierung der Pflanze im Pflanztopf in mindestens zwei Wachstumsphasen, wobei die Pflanztöpfe zwischen erster und zweiter Wachstumsphase auf größere Abstände umgesetzt werden. Beispielsweise erfolgt die erste Wachstumsphase mit den Pflanztöpfen außerhalb des Trays. Dadurch können die Pflanztöpfe auf einen engeren Abstand gesetzt werden, so dass die Ausnutzung der Fläche im Zuchtbetrieb verbessert wird und die Kosten des Verfahrens sinken. Die erste Wachstumsphase wird beendet, bevor es zu einer Beeinträchtigung benachbarter Pflanzen, insbesondere zu einem Verwachsen durch ihre Wurzel kommen kann. Im Anschluss an eine erste Wachstumsphase, wenn die Pflanzen größer geworden sind und somit beginnen sich gegenseitig zu beeinflussen, werden die Pflanztöpfe auf größere Abstände umgesetzt. Dies kann beispielsweise dadurch entstehen, dass die Pflanztöpfe erfindungsgemäß in ein entsprechendes Tray eingebracht werden. Damit steht den Pflanzen in der zweiten Wachstumsphase mehr Raum für ihre weitere Entwicklung zur Verfügung.

Besonders vorteilhaft werden die Pflanztöpfe für die erste Wachstumsphase in Steigen angeordnet. Dadurch sind die Pflanztöpfe in einem definierten Abstand zueinander angeordnet und mehrere Pflanztöpfe auf einmal können über eine Steige gehandhabt werden.

In einer vorteilhaften Ausführungsform des Verfahrens werden die Pflanztöpfe nach der ersten Wachstumsphase anhand von Merkmalen zur Beurteilung der Entwicklung sortiert. Dabei werden insbesondere gleich weit entwickelte Pflanzen zusammengefasst bzw. unterschiedlich entwickelte Pflanzen voneinander getrennt, so dass diese im weiteren Verlauf, insbesondere in der zweiten Wachstumsphase jeweils optimale Wachstumsbedingungen erfahren können. Nicht entwickelte oder sehr schlecht entwickelte Pflanzen können an dieser Stelle von weiteren Behandlungen ausgeschlossen werden. Als Merkmale zur Beurteilung der Entwicklung dienen vorzugsweise hierbei die Größe der Pflanzen, die Form, Farbe und/oder Anzahl der Blätter, Anzahl der Blütenstände, sowie Form, Farbe, Größe und/oder Anzahl von Blüten bzw. Knospen jeweils einzeln oder in Kombination mit anderen Merkmalen. Dies verringert Investitionen in nicht ertragreiche Pflanzen und erhöht die Ökonomie des Verfahrens. Mit besonderem Vorteil erfolgt die Sortierung durch eine automatisierte optische Bewertung. In Kombination mit dem erfindungsgemäßen Einbringen des Pflanztopfes in das Tray wird die gegenseitige Beeinflussung dann in etwa in gleichen Wachstumszustände bzw. Größen vorliegender Pflanzen minimiert.

Vorzugsweise werden das Tray und/oder die in den eingesetzten Pflanztöpfen befindlichen Pflanzen am Ende der Kultivierung ausgestattet. Ausstatten bedeutet in diesem Zusammenhang, dass an dem Tray oder den Pflanzen abschließende Arbeiten vorgenommen werden. Hierzu zählt beispielsweise das Verpacken oder Abdecken einzelner Bereiche des Trays, zum Beispiel einer Oberseite des Nutzen. Die im Tray zusammengefassten Pflanzen entsprechen anschließend den Kundenbedürfnissen.

Besonders vorteilhaft werden im Tray Pflanztöpfe mit fehlentwickelten Pflanzen durch Pflanztöpfe mit gut entwickelten Pflanzen ersetzt. Dadurch kann sichergestellt werden, dass die im Tray angeordneten Pflanzen denselben Entwicklungsgrad aufweisen. Die Weiterverwendung wird somit erleichtert.

Ebenfalls kann es vorteilhalft sein, dass die Pflanzen durch Verdrehen der Pflanztöpfe im Tray ausgerichtet werden. Dies kann entweder so erfolgen, dass die Pflanzen eine identische Ausrichtung erhalten oder indem die Pflanztöpfe so ausgerichtet werden, dass die Pflanzen für Ihre Blätter jeweils den bestmöglichen Raum erhalten. Mit besonderem Vorteil werden Düngemittel in die Pflanztöpfe eingebracht, gegebenenfalls abgestimmt auf die unterschiedlichen Größen der Pflanzen um ebenfalls die Pflanzen möglichst auf die gleiche Größe zu bringen.

Mit Vorteil werden der Tray und/oder die Pflanztöpfe gekennzeichnet. Eine solche Kennzeichnung kann beispielsweise durch Anbringen eines Aufklebers mit einer Nummer oder einem Barcode erfolgen.

Weitere Aspekte des erfindungsgemäßen Verfahrens lassen sich der nachfolgenden Figurenbeschreibung entnehmen. Es zeigen
- Fig. 1:: Das erfindungsgemäße Verfahren,
- Fig. 2:: ein System zur Durchführung des erfindungsgemäßen Verfahrens,
- Fig. 3:: eine Detail-Darstellung des Systems nach Fig. 2,
- Fig. 4:: eine Schnittdarstellung nach IV-IV in Fig. 3,
- Fig. 5:: eine Schnittdarstellung nach V-V nach Fig. 3.

Nachfolgend werden gleichliegende Elemente der Erfindung mit einer einheitlichen Bezugsziffer versehen, sofern dies sinnvoll ist. Die nachfolgend beschriebenen Merkmale der Ausführungsbeispiele können auch in anderen Merkmalskombinationen als dargestellt und in Kombination mit zumindest den Merkmalen des unabhängigen Anspruchs Gegenstand der Erfindung sein.

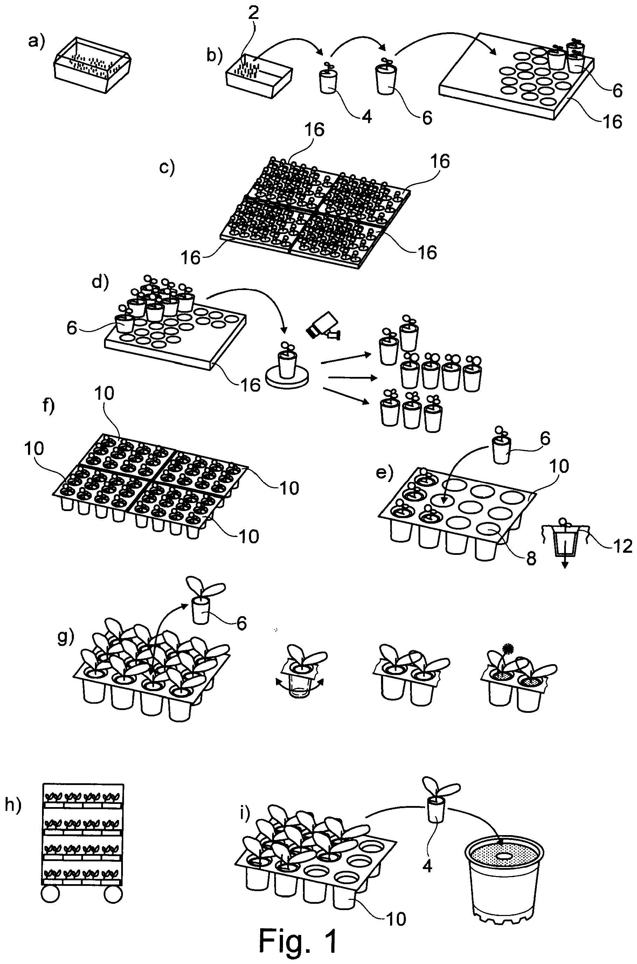

Fig 1 a) zeigt die Bereitstellung von Pflänzlingen 2 für die Durchführung des Verfahrens. Diese werden in einem ersten Verfahrensschritt in ein Substrat 4 in Form eines Plugs eingebracht (Fig. 1 b). Der Plug ist hierzu längs geschlitzt. Der Plug wird am Schlitz aufgebogen und der Pflänzling 2 in den Plug eingebracht. Der Pflänzling 2 mit dem Substrat 4 wird anschließend in einen Pflanztopf 6 eingebracht.

Mehrere derartige Pflanztöpfe 6, in die jeweils ein Pflänzling 2 mit Substrat 4 eingebracht wurde, werden in einer Steige 16 eng nebeneinander angeordnet. Die Steigen 16 dienen hierbei einer vereinfachten Handhabung der eng nebeneinander angeordneten Pflanztöpfe 6.

Fig 1 c) stellt die an das Einbringen der Pflänzlinge 2 in die Pflanztöpfe 6 anschließende Wachstumsphase dar. Mehrere Steigen 16 werden zur besseren Raumausnutzung nebeneinander angeordnet.

Am Ende dieser ersten Wachstumsphase werden die einzelnen Pflanzen einer optischen Bewertung unterzogen (Fig. 1 d). Diese erfolgt hier automatisiert. Es wird ein Bild von ein oder mehreren Pflanzen gemacht und automatisch ausgewertet. Die Pflanzen werden anschließend je nach Entwicklungszustand sortiert. Diese Sortierung kann beispielsweise in drei Kategorien "schwach entwickelte", "normal entwickelte" und "überdurchschnittlich entwickelte" bezogen auf die Größe, Form und/oder Anzahl der Blätter oder andere der oben genannten Merkmale oder Kombinationen von Merkmalen erfolgen.

In einem nächsten Verfahrensschritt, dargestellt in Fig. 1 e), werden Pflanztöpfe 6 mit Pflanzen, die der gleichen Kategorie zugeordnet wurden, in die Nutzen 8 eines Trays 10 eingebracht. Die Pflanztöpfe 6 werden dabei soweit in den Nutzen 8 des Trays 10 eingebracht, dass eine für Wurzelwerk undurchdringbare und insbesondere undurchbrochene Nutzenwandung 12 den Pflanztopf 6 überragt. Die Pflanztöpfe 6 werden im Beispielverfahren an dieser Stelle im Nutzen 8 des Trays 10 festgelegt, wobei Festlegen hier ein Festlegen gegenüber Bewegungen des Pflanztopfes 6 aus dem Nutzen 8 des Trays 10 meint. Gleichzeitig oder zusätzlich kann ein Verhindern von Rotationsbewegungen im Nutzen 8 erfolgen, stellt für sich alleine jedoch kein Festlegen im Sinne dieses Verfahrens dar.

Die Pflanzen werden beim Umsetzen von den Steigen 16 in die Trays 10 auf einen größeren Abstand zueinander versetzt. Durch das Einbringen der Pflanztöpfe 6 dergestalt, dass eine ununterbrochene Nutzenwandung 12 den Pflanztopf 6 überragt, wird erreicht, dass ein Ausbilden von Wurzeln eines Epiphyten, die in einen benachbarten Nutzen 8 hinüberragen, vermindert wird. Ein Verbinden zweier benachbarter und insbesondere in etwa gleich großer Pflanzen über solche aus ihrem Nutzen 8 herausragenden Wurzeln wird somit weitgehend vermieden.

An das Einbringen der Pflanztöpfe 6 schließt sich eine zweite Wachstumsphase an (Fig. 1 f). Auch hier werden wieder mehrere Trays nebeneinander angeordnet. Durch das Zusammenfassen von Pflanzen, die nach der ersten Wachstumsphase einen ähnlichen Entwicklungsstand erreicht haben, können in der zweiten Wachstumsphase diese Pflanzen gleich behandelt werden. So ist beispielsweise denkbar, dass die zweite Wachstumsphase für Pflanzen in einem Tray 10, der die am Ende der ersten Wachstumsphase überdurchschnittlich entwickelten Pflanzen enthält, verkürzt ist gegenüber der zweiten Wachstumsphase für Pflanzen in einem Tray 10, der die am Ende der ersten Wachstumsphase nur schwach entwickelten Pflanzen enthält. Mit dem Verfahren kann somit insbesondere durch das Zusammenstellen von jeweils ähnlich entwickelten Pflanzen in einem Tray 10 die Bedingungen in der zweiten Wachstumsphase optimal auf die Bedürfnisse dieser Pflanzen abgestimmt werden, wobei gleichzeitig die durch das erfindungsgemäße Verfahren bedingten Vorteile realisiert werden.

Fig. 1 g) zeigt die Ausstattung des Trays 10 und insbesondere der in den eingesetzten Pflanztöpfen befindlichen Pflanzen nach Abschluss der zweiten Wachstumsphase. Hierbei werden die am Ende der zweiten Wachstumsphase gegenüber den anderen Pflanzen im Tray 10 unterdurchschnittlich entwickelten Pflanzen mit ihren Pflanztöpfen 6 aus dem Tray 10 entnommen und durch Pflanztöpfe 6 mit ähnlich weit entwickelten Pflanzen ersetzt. Weiterhin werden die Pflanzen durch Verdrehen der Pflanztöpfe 6 im Nutzen 8 ausgerichtet. Am Tray 10 wird eine diesen Tray 10 identifizierende Markierung angebracht. Dies kann beispielsweise durch das Aufbringen eines selbstklebenden Etiketts mit einer Nummer oder einem maschinenlesbaren Zeichencode wie beispielsweise einem Strichcode erfolgen. Die Markierung kann jedoch auch in das Tray 10 eingestanzt oder aufgedruckt werden. Andere Markierungsmöglichkeiten sind ebenfalls denkbar.

In die Pflanztöpfe 6 im Tray 10 kann weiterhin Dünger eingebracht werden und/oder das Substrat, beispielsweise mit einem Vliesstoff, abgedeckt werden. Die ausgestatteten Trays 10 werden in einem Transportwagen zusammengefasst und zum nächsten Verarbeitungsschritt verbracht (Fig. 1 h).

Anschließend werden die kultivierten Pflanzen mit dem Substrat 4 aus dem im Tray 10 festgelegten Pflanztopf 6 entnommen, wobei der Pflanztopf 6 im Nutzen 8 des Trays 10 verbleibt. Die Pflanze mit dem Substrat 4 wird dann beispielsweise in einen größeren mit Substrat gefüllten Pflanztopf umgepflanzt (Fig. 1 i).

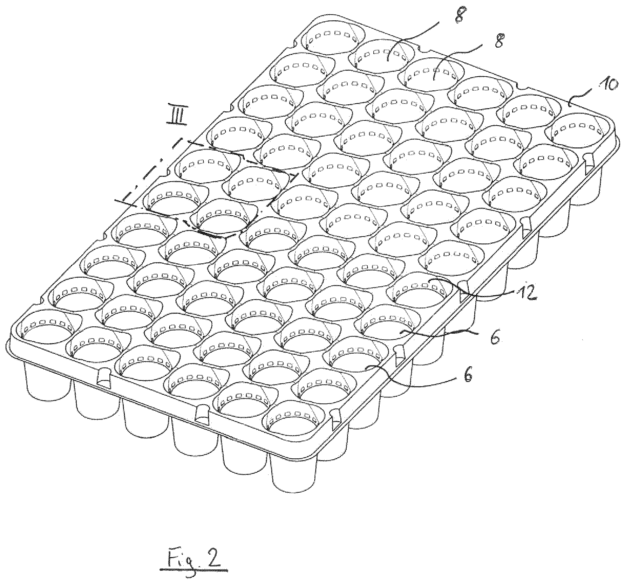

Fig. 2 zeigt ein System zur Durchführung des Verfahrens, mit einem Tray 10 mit mehreren Nutzen 8. In einige dieser Nutzen 8 sind eingebrachte Pflanztöpfe 6 dargestellt, derart, dass jeweils eine für Wurzelwerk undurchdringbare und insbesondere undurchbrochene Nutzenwandung 12 den Pflanztopf 6 überragt. Der Tray 10 weist im Bereich der den Pflanztopf 6 überragenden Nutzenwandung 12 Elemente 14 auf, mit dem der Pflanztopf 6 in dem Nutzen 8 festgelegt wird. Eine Festlegung des Pflanztopfes 6 bedeutet hierbei, dass der Pflanztopf 6 gegen eine Entnahme gesichert ist. Ein Verdrehen des Pflanztopfes 6 kann durch die Sicherung unterbunden werden, diese ist aber nicht zwingend notwendig. Die Elemente 14 sind als Rastnocken ausgebildet. Eine Festlegung des Pflanztopfes 6 erfolgt durch das vollständige Einbringen in des Pflanztopfs 6 in den Nutzen 8. Durch obenseitige Anlaufschrägen ist das Einbringen leicht zu realisieren, während eine unterseitige Kante des Rastnockens auf den Rand des Pflanztopfes 6 einwirkt, das ein einfaches Entfernen des Pflanztopfes 6 aus dem Nutzen 8 verhindert wird.

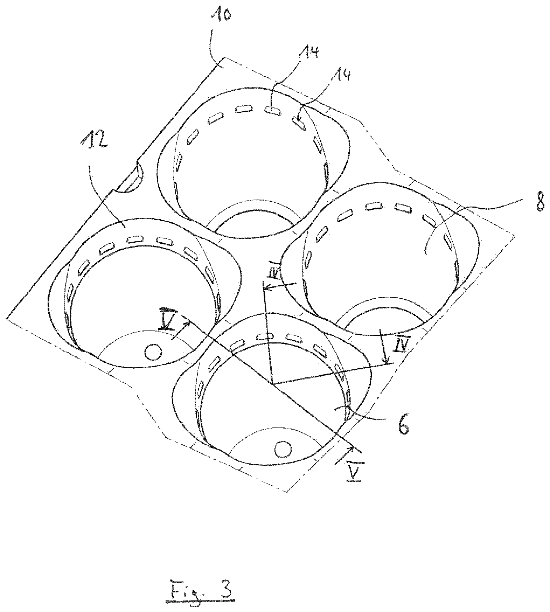

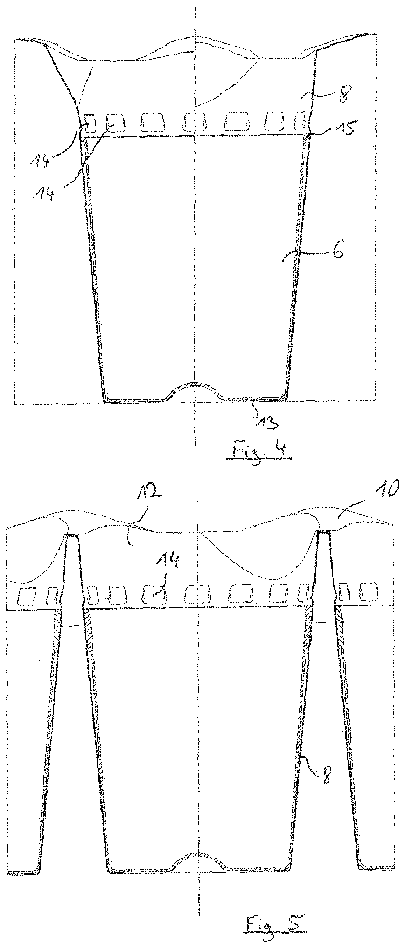

Fig. 3 zeigt das Detail III in einer vergrößerten Ansicht. Dargestellt sind vier Nutzen 8. In zwei der Nutzen 8 sind Pflanztöpfe 6 eingebracht, wobei sie durch die als Rastnocken ausgestalteten Elemente 14 festgelegt sind. Fig. 4 und Fig. 5 zeigen Schnittdarstellungen durch einen Nutzen 8 mit eingebrachtem Pflanztopf 6 gemäß Schnittverlauf IV-IV bzw. V-V in Fig. 3. Der in den Nutzen 8 eingebrachte Pflanztopf 6 weist eine undurchbrochene Seitenwand auf. Diese bildet zusammen mit der undurchbrochenen Nutzenwandung 12 eine vollumfängliche seitliche Begrenzung des Wachstumsbereichs der Pflanze oberhalb des Pflanztopfbodens 13 aus. Der obere Außenrand 15 des Pflanztopfes 6 ist an der Nutzenwandung 8 eng anliegend ausgestaltet. Der Bereich zwischen Außenrand 15 des Pflanztopfes 6 und Nutzenwandung 8 ist somit für Wurzeln der Pflanze undurchdringlich.

## Patentansprüche

1. Verfahren zum Kultivieren einer Pflanze, insbesondere einer Orchidee, wobei ein Pflänzling (2) zumindest teilweise von einem Substrat (4) umgeben in einen Pflanztopf (6) eingebracht wird, der Pflanztopf (6) in einen von mehreren Nutzen (8) eines Trays (10) eingebracht wird und der Pflanztopf (6) im Nutzen (8) festgelegt wird, **dadurch gekennzeichnet, dass** der Pflanztopf (6) soweit in den Nutzen (8) des Trays (10) eingebracht wird, dass eine für Wurzelwerk undurchdringbare und insbesondere undurchbrochene Nutzenwandung (12) den Pflanztopf (6) überragt.

2. Verfahren nach Anspruch 1, **dadurch gekennzeichnet, dass** durch das Einbringen des Pflanztopfes (6) in den Nutzen (8) oberhalb eines Pflanztopfbodens (13) ein vollumfänglich seitlich begrenzter für Wurzelwerk undurchdringbarer und insbesondere undurchbrochener Wachstumsbereich der Pflanze hergestellt wird.

3. Verfahren nach Anspruch 1 oder 2, **dadurch gekennzeichnet, dass** Pflanztopf (6) und Nutzen (8) des Trays (10) so aufeinander abgestimmt werden, dass ein Übergang zwischen dem oberen Außenrand (15) des Pflanztopfes (6) und der Nutzenwandung (12) für Wurzeln undurchdringlich ist.

4. Verfahren nach einem der vorherigen Ansprüche, **dadurch gekennzeichnet, dass** die kultivierte Pflanze mit dem Substrat (4) aus dem im Tray (10) festgelegten Pflanztopf (6) entnommen wird, wobei der Pflanztopf (6) im Nutzen (8) des Trays (10) verbleibt.

5. Verfahren nach einem der vorherigen Ansprüche, **dadurch gekennzeichnet, dass** eine Kultivierung der Pflanze im Pflanztopf (6) in mindestens zwei Wachstumsphasen erfolgt, wobei die Pflanztöpfe (6) zwischen erster und zweiter Wachstumsphase auf größere Abstände umgesetzt werden.

6. Verfahren nach Anspruch 5, **dadurch gekennzeichnet, dass** die Pflanztöpfe (6) für die erste Wachstumsphase in Steigen (16) angeordnet werden.

7. Verfahren nach einem der Ansprüche 5 oder 6, **dadurch gekennzeichnet, dass** die Pflanztöpfe (6) für die zweite Wachstumsphase im Tray (8) angeordnet werden.

8. Verfahren nach einem der Ansprüche 5 bis 7, **dadurch gekennzeichnet, dass** die Pflanztöpfe (6) nach der ersten Wachstumsphase anhand von Merkmalen zur Beurteilung der Entwicklung der Pflanzen sortiert werden.

9. Verfahren nach Anspruch 8, **dadurch gekennzeichnet, dass** das Sortieren durch eine automatisierte optische Bewertung erfolgt.

10. Verfahren nach einem der vorherigen Ansprüche, **dadurch gekennzeichnet, dass** das Tray (10) und/oder die in den eingesetzten Pflanztöpfen befindlichen Pflanzen insbesondere am Ende der Kultivierung ausgestattet werden.

11. Verfahren nach Anspruch 10, **dadurch gekennzeichnet, dass** im Tray (10) Pflanztöpfe (6) mit fehlentwickelten Pflanzen durch Pflanztöpfe (6) mit gut entwickelten Pflanzen ersetzt werden.

12. Verfahren nach Anspruch 10 oder 11, **dadurch gekennzeichnet, dass** die Pflanzen durch Verdrehen der Pflanztöpfe (6) im Tray (10) ausgerichtet werden

13. Verfahren nach einem der Ansprüche 10 bis 12, **dadurch gekennzeichnet, dass** Düngemittel in die Pflanztöpfe (6) eingebracht wird.

14. Verfahren nach einem der Ansprüche 10 bis 13, **dadurch gekennzeichnet, dass** der Tray (10) und/oder die Pflanztöpfe (6) gekennzeichnet werden.

## Claims

1. Method for cultivating a plant, in particular an orchid, wherein a seedling (2) at least partially surrounded by a substrate (4) is introduced into a plant pot (6), the plant pot (6) is introduced into one of a plurality of cells (8) of a tray (10) and the plant pot (6) is fixed in the cell (8), **characterised in that** the plant pot (6) is introduced into the cell (8) of the tray (10) until a cell wall (12), which is impenetrable for the root system and in particular unbroken, protrudes over the plant pot (6).

2. Method according to claim 1, **characterised in that** a completely laterally limited plant growth region, which is impenetrable for the root system and in particular unbroken, is established above a plant pot base (13) as a result of the introduction of the plant pot (6) into the cell (8).

3. Method according to claim 1 or 2, **characterised in that** plant pot (6) and cell (8) of the tray (10) are matched with one another such that a transition between the upper outer edge (15) of the plant pot (6) and the cell wall (12) is impenetrable for roots.

4. Method according to any one of the preceding claims, **characterised in that** the cultivated plant with the substrate (4) is removed from the plant pot (6) fixed in the tray (10), wherein the plant pot (6) remains in the cell (8) of the tray (10).

5. Method according to any one of the preceding claims, **characterised in that** the plant is cultivated in the plant pot (6) in at least two growth phases, wherein the plant pots (6) are repositioned at greater intervals between first and second growth phase.

6. Method according to claim 5, **characterised in that** the plant pots (6) are arranged in crates (16) for the first growth phase.

7. Method according to any one of claims 5 or 6, **characterised in that** the plant pots (6) are arranged in the tray (|8|[A1]) for the second growth phase.

8. Method according to any one of claims 5 to 7, **characterised in that** the plant pots (6) are sorted after the first growth phase on the basis of features to assess the development of the plants.

9. Method according to claim 8, **characterised in that** the sorting is done by means of an automated visual evaluation.

10. Method according to any one of the preceding claims, **characterised in that** the tray (10) and/or the plants situated in the inserted plant pots are configured in particular at the end of cultivation.

11. Method according to claim 10, **characterised in that** plant pots (6) containing maldeveloped plants are replaced with plant pots (6) containing well-developed plants in the tray (10).

12. Method according to claim 10 or 11, **characterised in that** the plants are oriented by twisting the plant pots (6) in the tray (10).

13. Method according to any one of claims 10 to 12, **characterised in that** fertilizer is introduced into the plant pots (6).

14. Method according to any one of claims 10 to 13, **characterised in that** the tray (10) and/or the plant pots (6) are labelled.

## Revendications

1. Procédé destiné à la culture d'une plante, en particulier d'une orchidée, dans lequel un semis (2) entouré, au moins en partie, d'un substrat (4) est introduit dans un godet (6), le godet (6) est introduit dans une de plusieurs alvéoles (8) d'un plateau (10) et le godet (6) est fixé dans l'alvéole (8), **caractérisé en ce que** le godet (6) est introduit dans l'alvéole (8) du plateau (10) tant qu'une paroi d'alvéole (12), que le système racinaire ne peut pas traverser et qui est en particulier non ajourée, dépasse du godet (6).

2. Procédé selon la revendication 1, **caractérisé en ce que** l'introduction du godet (6) dans l'alvéole (8) au-dessus d'un fond de godet (13) permet de créer une zone de croissance de la plante entièrement délimitée latéralement, zone que le système racinaire ne peut pas traverser et qui est en particulier non ajourée.

3. Procédé selon la revendication 1 ou 2, **caractérisé en ce que** le godet (6) et l'alvéole (8) du plateau (10) s'adaptent l'un à l'autre de telle sorte qu'une jonction entre le bord extérieur supérieur (15) du godet (6) et la paroi d'alvéole (12) est impénétrable aux racines.

4. Procédé selon une des revendications précédentes, **caractérisé en ce que** la plante cultivée avec le substrat (4) est extraite du godet (6) fixé dans le plateau (10), le godet (6) restant dans l'alvéole (8) du plateau (10).

5. Procédé selon une des revendications précédentes, **caractérisé en ce qu'**une culture de la plante dans le godet (6) se fait au moins dans deux phases de croissance, dans lequel les godets (6) sont déplacés dans des emplacements plus grands entre une première et une seconde phase de croissance.

6. Procédé selon la revendication 5, **caractérisé en ce que** les godets (6) sont disposés dans des cagettes (16) pour la première phase de croissance.

7. Procédé selon une des revendications 5 ou 6, **caractérisé en ce que** les godets (6) sont disposés dans le plateau (8) pour la seconde phase de croissance.

8. Procédé selon une des revendications 5 à 7, **caractérisé en ce que** les godets (6) sont triés après la première phase de croissance à l'aide de critères permettant d'évaluer le développement des plantes.

9. Procédé selon la revendication 8, **caractérisé en ce que** le tri se fait par évaluation optique automatisée.

10. Procédé selon une des revendications précédentes, **caractérisé en ce que** le plateau (10) et/ou les plantes qui se trouvent dans les godets mis en place sont installées en particulier à la fin de la culture.

11. Procédé selon la revendication 10, **caractérisé en ce que** les godets (6) dans le plateau (10) qui ont des plantes qui se sont mal développées sont remplacés par des godets (6) avec des plantes qui se sont bien développées.

12. Procédé selon la revendication 10 ou 11, **caractérisé en ce que** les plantes sont alignées en tournant les godets (6) dans le plateau (10).

13. Procédé selon une des revendications 10 à 12, **caractérisé en ce qu'**un engrais est introduit dans les godets (6).

14. Procédé selon une des revendications 10 à 13, **caractérisé en ce que** le plateau (10) et/ou les godets (6) sont marqués.
